# EUROPEAN PATENT APPLICATION

(11) **EP 2 410 603 A1**
(43) Date of publication of application: **25.01.2012**
(21) Application number: 11179462.4
(22) Date of filing: 31.08.2011
(51) Int. Cl.: H01M 10/54, H01M 6/52

(54) **Recovery of compounds from Li-ion battery electrolyte**

(71) Applicant: Umicore SA, 1000 Brussels (BE)
(72) Inventor: Thijs, Ben, 2250 Olen (BE); Pelgrims, Jonathan, 2250 Olen (BE)
(74) Representative: Umicore RDI Patent Department

(57) **Abstract**

The present disclosure concerns the recovery of valuable compounds from electrolytes of the type found in Li-ion rechargeable batteries.

The process for the recovery of lithium hexafluorophosphate, and organic carbonates from battery electrolyte, comprises the steps of:
- contacting the electrolyte with a phosphonium chloride-based ionic liquid, thereby forming a solid phase comprising LiCl, and a liquid phase comprising a phosphonium hexafluorophosphate-based ionic liquid and the organic carbonates;
- separating the solid and the liquid phases, thereby isolating LiCl;
- water-extraction of the organic carbonates from the liquid phase, thereby obtaining two immiscible liquid phases consisting of a first phase comprising an aqueous solution of the organic carbonates, and a second phase comprising the phosphonium hexafluorophosphate-based ionic liquid;
- separating said immiscible liquid phases, thereby isolating the phosphonium hexafluorophosphate-based ionic liquid;
- evaporating the water from the liquid phase comprising the aqueous solution, thereby recovering the organic carbonates.

Thanks to the exploitation of suitable ionic liquids, lithium, hexafluorophosphate, and the organic carbonates are recovered at high yields. The process is clean and safe, as volatile organic solvents are totally avoided.

## Description

The present disclosure concerns the recovery of valuable compounds from electrolytes such as those found in lithium-ion rechargeable batteries.

The three primary functional components of a lithium-ion battery are the anode, the cathode, and the electrolyte. The anode of a conventional lithium-ion cell is made from carbon, the cathode of transition metal oxides such as cobalt, nickel, manganese, and the electrolyte is non-aqueous solvent containing a lithium salt. Other lithium-ion batteries, e.g. based on lithium iron phosphates cathodes, are also present on the market.

The electrolyte should conduct lithium ions, acting as a carrier between the cathode and the anode when a battery passes an electric current through an external circuit. Solvents in current use decompose on initial charging and form a solid interphase layer, which is electrically insulating, yet provides sufficient ionic conductivity. This interphase prevents further decomposition of the electrolyte in subsequent charge/discharge cycles.

Such solvents typically consist of a mixture of organic carbonates such as ethylene carbonate (EC), di-methyl carbonate (DMC) and propylene carbonate (PC).

The lithium salt normally consists of a hexafluorophosphate, LiPF₆. Its concentration in the electrolyte typically amounts to 1 mole per liter. In practice, about 10 to 20% of the total battery lithium resides in the electrolyte, the remainder being captive of the anode or the cathode material.

As the market of lithium-based secondary batteries is rapidly expanding, with more to come further to the expected proliferation of electric vehicles, the recovery of valuable compounds from spent batteries is of growing commercial importance. Accordingly, several processes have been described, most of them concerning the recovery of lithium and of the transition metals in the cathode.

WO2005101564(A1) discloses a process wherein lithium-based batteries are dry-shredded under inert atmosphere, whereupon the shreds are sorted and treated in a hydrometallurgy process. The cobalt- and lithium-bearing shreds are washed with water, thereby releasing the lithium, which is precipitated. The shreds are then subjected to an acid leach to recover the cobalt. The hexafluorophosphate anions are said to be recoverable as complexes with [Ni(NH3) 6]²⁺ or with dihydro-1,4-diphenyl-3,5-phenylimino-1,2,4-triazole.

This and other known processes do not allow for the simultaneous recovery of lithium, hexafluorophosphate, and organic carbonates from electrolytes.

The aim of the present invention is to provide a process capable of recovering the three above-mentioned ingredients from electrolytes as valuable products. In particular, a process is offered comprising the steps of:
- contacting the electrolyte with a phosphonium chloride-based ionic liquid, thereby forming a solid phase comprising LiCl, and a liquid phase comprising a phosphonium hexafluorophosphate-based ionic liquid and the organic carbonates;
- separating the solid and the liquid phases, thereby isolating LiCl;
- water-extraction of the organic carbonates from the liquid phase, thereby obtaining two immiscible liquid phases consisting of a first phase comprising an aqueous solution of the organic carbonates, and a second phase comprising the phosphonium hexafluorophosphate-based ionic liquid;
- separating said immiscible liquid phases, thereby isolating the phosphonium hexafluorophosphate-based ionic liquid;
- evaporating the water from the liquid phase comprising the aqueous solution, thereby recovering the organic carbonates.

This process can be preceded by a step of mechanical separation of the electrolyte from said batteries.

In some cases, it might be useful to reconvert the phosphonium hexafluorophosphate-based ionic liquid to its original chloride-based form.

This process relies on a particular behaviour of the elected phosphonium chloride-based ionic liquids, namely:
- such ionic liquids are soluble in the battery electrolyte;
- the chloride anion of the ionic liquids forms with the lithium a LiCl compound that is insoluble in the ionic liquid-electrolyte mixture.

Consequently, rapid reaction rates are observed, and a simple solid/liquid separation scheme is available to isolate the lithium and the hexafluorophosphate. Also, only a limited amount of water needs to be evaporated in the final step, as the quantity of water added in the extraction step can be kept minimal.

Spent electrolyte can be obtained as such from battery manufacturers dealing with out-of-spec production lots. It can also be recovered from end-of-life batteries, e.g. by subjecting their shreds to a washing step using an ionic liquid solution according to the present invention.

It is noteworthy that the reclamation of the organic carbonates can be performed by other means than by water extraction followed by evaporation. The contained carbonates can be recovered by extraction of the ionic liquid using an apolar organic solvent such as hexane. A pure liquid carbonate phase is then obtained, and also a hexane/ionic liquid phase, from which the hexane can easily be evaporated. The advantage of this scheme is one of higher recovery yields; however, resorting to volatile organics for the extraction is perceived as a drawback.

Furthermore, it should be mentioned that the ionic liquid, having undergone the substitution of its Cl⁻ anion by a PF6- anion in the contacting step, could be returned to its original form using an anion exchange technique. This would allow closing the loop on the ionic liquid.

Even without anion exchange, the ionic liquid in its PF6⁻ form still represents an interesting valuation of the anion, as it has a commercial value in excess of that of the starting Cl⁻ form. For these tests, a commercial phosphonium ionic liquid having a chloride anion was used (Cytec Cyphos^{®} IL101, by). This anion forms LiCl when the ionic liquid is mixed with electrolyte in stoichiometric amounts. LiCl is not soluble in this mixture and precipitates. The phosphonium PF6 is a valuable ionic liquid, also marketted by Cytec.

The following example illustrates the three steps of the process.

### Step 1: Precipitation of lithium with the IL101ionic liquid, followed by separation of a LiCl residue.

The electrolyte consists of propylene carbonate in which 1M Li⁺ (as LiPF6) is dissolved. To the electrolyte, IL101 is added in a 1:1 molar ratio of Li⁺:IL,101. The mixture is stirred using a magnetic stirrer during 1 hour at room temperature. The mixture is then filtrated on a filter paper under vacuum. The residue is washed with 50 ml dichloromethane and dried for 24 hours at 70 °C. The filtrate is analysed for Li, the residue is analysed for Li and Cl.

**Table: Lithium and chlorine distribution over the phases**

| | Li | Cl |
|---|---|---|
| Electrolyte | 6300 mg/L | - |
| Filtrate | 330 mg/L | - |
| Residue | 15% | 72% |

During this precipitation step a yield of 95% is obtained for Li.

### Step 2: Separation of the organic carbonates and the ionic liquid by extraction with water.

The filtrate of Step 1 consists of the organic carbonates of the electrolyte and of the phosphonium ionic liquid with PF₆⁻ as anion instead of Cl⁻.

Since the ionic liquid is insoluble in water, whereas the electrolyte is soluble, (ca. 200 gram electrolyte per litre water), it is possible to extract the latter with water. This separation can be accomplished in a single step or in multiple-steps. Since the ionic liquid melts at 40 °C, a solid phase will start to form during extraction. At the end of the extraction all of the ionic liquid has become solid. Alternatively, the ionic liquid can be kept in the liquid phase by working above its melting point.

In a first embodiment, a single extraction step is applied, the filtrate being mixed with 10 times its volume of water and stirred (magnetic stirrer) during 24 hours at room temperature. After 24 hours, the mixture is filtrated on a paper filter under vacuum. The residue on the filter is the solidified ionic liquid, and the filtrate consists of a mixture of water and organic carbonates.

In a second embodiment, applying a multi-step extraction, the filtrate is mixed with 1 time its volume of water and stirred (magnetic stirrer) during 1 to 2 hours at room temperature. After 30 minutes the water, forming a separate top layer, is collected, and a fresh amount of water is added. This extraction is repeated 10 times. After 5 to 6 extraction steps, solid ionic "liquid" begins to appear. All aqueous phases are put together for processing in Step 3.

### Step 3: Evaporation of water, isolation of the organic carbonates.

The removal of water from the water-phase is performed on a rotary evaporator type Heidolph Laborota^{®} 4003. The solution is placed in the rotary evaporator and heated at 65 °C and 80 mmHg during 30 minutes. The water evaporates under these conditions; the remaining liquid consists of organic carbonates.

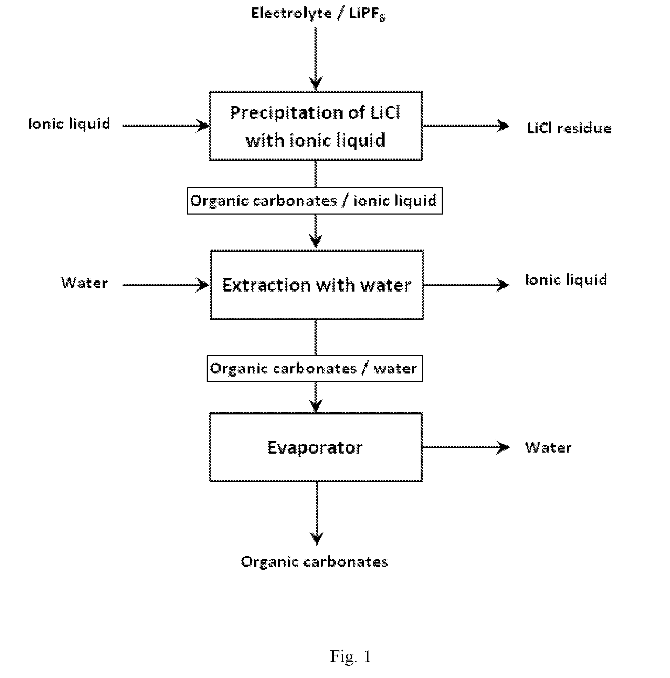

## Claims

1. Process for the recovery of lithium hexafluorophosphate, and organic carbonates from battery electrolyte comprising the steps of:
- contacting the electrolyte with a phosphonium chloride-based ionic liquid, thereby forming a solid phase comprising LiCl, and a liquid phase comprising a phosphonium hexafluorophosphate-based ionic liquid and the organic carbonates;
- separating the solid and the liquid phases, thereby isolating LiCl;
- water-extraction of the organic carbonates from the liquid phase, thereby obtaining two immiscible liquid phases consisting of a first phase comprising an aqueous solution of the organic carbonates, and a second phase comprising the phosphonium hexafluorophosphate-based ionic liquid;
- separating said immiscible liquid phases, thereby isolating the phosphonium hexafluorophosphate-based ionic liquid;
- evaporating the water from the liquid phase comprising the aqueous solution, thereby recovering the organic carbonates.

2. Process for the recovery of Li and organic carbonates from spent Li-ion batteries, comprising the step of a mechanical separation of the electrolyte from said batteries, followed by the steps according to claim 1.

3. Process according to claims 1 or 2, followed by the conversion of the phosphonium fluoride comprised in said second phase to phosphonium chloride.
